# EUROPEAN PATENT APPLICATION

(11) **EP 4 797 180 A1**
(43) Date of publication of application: **26.08.2026**
(21) Application number: 25397501.5
(22) Date of filing: 21.02.2025
(51) Int. Cl.: G06Q 20/10, G06Q 20/20, G06Q 20/38, G06Q 20/40

(54) **METHOD AND SYSTEM FOR PROVIDING A CARD EVENT NOTIFICATION TO A USER**

(71) Applicant: Giesecke+Devrient ePayments GmbH, 81677 München (DE)
(72) Inventor: LILJA, Viliina, 00180 Helsinki (FI); MONONEN, Tero, 00180 Helsinki (FI)
(74) Representative: LKGLOBAL Partnerschaftsgesellschaft mbB

(57) **Abstract**

The invention relates to a method for providing a card event notification. A method step (S10) comprises connecting a card with an application stored on a user device (1). Another step (S20) comprises receiving a user input comprising a selected card event. Another step (S30) comprises providing the user input to a first server entity (10) for storage thereon. Another step (S40) comprises obtaining a card event information by a second server entity (20), which represents a card event carried out in connection with a service provider entity (30). Another step (S50) comprises providing the card event information from the second server entity (20) to the first server entity (10). Another step (S60) comprises determining whether the card event corresponds to the selected card event. Another step (S70) comprises providing a notification to the user device (1) if the card event corresponds to the selected card event. The invention further relates to a system (100) for providing a card event notification to a user.

## Description

The present invention generally relates to user-configurable notification methodologies in the context of card events carried out in connection with service provider entities. In particular, the invention relates to a method for providing a card event notification to a user as well as a system for providing a card event notification to a user.

User devices like mobile phones are commonly used to add or connect a card, e.g., a payment card, to a specified wallet app stored on the user device. This allows the user of the user device to perform payment transactions without physical presentation of the card itself. Usually, a so-called tokenization process will be involved when the user adds or connects the card to the wallet app. In particular, sensitive data associated to the card will be replaced with a token that is saved on the user device or at the merchant's site where the card is registered via the wallet app. In other words, the tokenization process maps the sensitive data to a specific token which can only be used by the parties that are involved in the tokenization process and cannot be used by any third parties, which may avoid access to sensitive user data by third parties. However, due to the absence of a physical card, the card user who has added or connected the card to a wallet app stored on the user device may not be aware of certain card events taking place. This might reduce the awareness of the user about any card activities, such as unauthorized transactions, card expiration, or changes in card terms and conditions.

It may be seen as an object of the invention to improve user awareness with respect to card events carried out in connection with a service provider entity.

A method and a system according to the features of the independent claims are provided. Further embodiments of the invention are evident from the dependent claims, the Figures and the following description.

According to an aspect of the invention, a method for providing a card event notification to a user is provided. A step of the method comprises connecting a card with an application stored on a user device. Another step of the method comprises receiving a user input comprising a selection of a card event associated to the card, thereby providing a selected card event (herein also referred to as user-selected card event). Another step of the method comprises providing the user input to a first server entity which stores the selected card event. Another step of the method comprises obtaining a card event information by a second server entity, the card event information being representative for a card event carried out in connection with a service provider entity. Another step of the method comprises providing the card event information from the second server entity to the first server entity. Another step of the method comprises determining, at the first server entity, whether the card event represented by the card event information corresponds to the selected card event. Another step of the method comprises providing a card event notification to the user device indicating the card event, upon determining that the card event represented by the card event information corresponds to the selected card event. The method steps may be performed in the indicated order.

The inventive method may allow a user to select one or more specific card events and/or card event types about which the user wishes to be informed or notified. In particular, the user can configure a list of card events which are considered important by the user and about which the user wishes to be informed. In other words, the inventive method provides a user-configurable notification methodology, especially for token-based card events, wherein the user-selected one or more specific card events can be centrally stored in the first server entity from where they are reported if a corresponding card event takes place. This means that the user selection can be stored independently from any service provider entity, e.g., merchants, or from any token service providers involved in token-based card events.

The user may connect the card, e.g., a payment card like a debit or credit card, with an application, e.g., a wallet application, stored on the user device. The user device may be a mobile phone, a smartwatch, a head-mounted device or another portable mobile device on which the application can be stored.

The card which is to be connected with, e.g., added to, the application of the user device may be a physical card which may be connected to the application by holding a chip of the card close to the user device on which the application is stored and/or by performing the required steps for registering the card with the application. The card may also be a virtual card which may be connected with, e.g., added to, the application by performing the required registering steps, for example by inputting card details into the user device.

Once the card is connected with the application, the user may input a possible or upcoming card event about which the user wishes to be notified in case the card event actually occurs. For example, the user browses and selects the desired notification(s) in the mobile application (e.g., banking app). The user may input this selection of the card event into the user device and the selected card event can then be transmitted to the first server entity where it is stored as a user-selected card event.

The first server entity may be a central server entity which is associated to multiple user devices and/or applications, and which may store user-selected card events for a plurality of different user devices. In an example, the first server entity is connected to a token service provider (represented by the second server entity) and the first server entity stores a plurality of user-selected token-based card events about which the user wishes to be notified.

In case of real card event taking place in connection with or at the service provider entity, this card event may be communicated as the card event information from service provider entity to the second server entity. The service provider entity may be a merchant's terminal device at which a card transaction, in particular a payment transaction, is carried out. However, other service provider entities may be contemplated as will be described hereinbelow. For example, the service provider entity may include wallet providers, wearable providers, car manufacturers, merchants, token requestor systems in general, etc. In other words, the service provider entity may be any entity or device where the user can initiate an interaction or transaction based on the card that has been connected to the application. The application stored on the user device may be directly associated with, e.g., offered by, the service provider entity. This means that a card may be connected to an application of a specified service provider entity such that the user may initiate an interaction or transaction in connection with this service provider entity using the card that is connected to the application.

It is possible that the above-mentioned selection of the card event the user wishes to be notified of may only be stored in the first server which is operated independently from the service provider entity.

The second server entity may be operatively and/or communicatively interconnected between the first server entity and the service provider entity. The second server entity may obtain the card event information, for example by recognizing a card event taking place at the service provider entity or by receiving a card event information from the service provider entity which is associated to the application to which the card has been previously connected by the user. The second server entity may obtain the card information from a plurality of service provider entities which are associated to different applications to which the card has been previously connected by the user. In an example, the second server entity may receive card event information of all card events taking place at service provider entities which are associated to the applications to which the card has been previously connected by the user. In this manner, the card event information which is then forwarded to the first server entity may be representative for all card events that take place and that are associated to the card which has been previously connected to the application(s).

This card event information may then be used at the first server entity to determine whether the card event or card events represented by the card event information correspond to the user-selected card event or card evets, respectively.

If it is determined that the card event represented by the card event information corresponds to, e.g., matches, the user-selected card event, a card event notification may be generated and forwarded to the user device which indicates the card event to the user. The card event notification may be visually, audibly and/or haptically presented via the user device to the user. For example, the card event notification may be presented in the form of a massage and/or via a display of the user device. The card event notification may include one or more card events that have been selected by the user and that have really taken place.

According to an embodiment, the user input comprises a selection of a plurality of card events associated to the card, thereby providing a plurality of selected card events (herein also referred to as user-selected card events), wherein the first server entity stores the plurality of selected card events, wherein it is determined at the first server entity whether the card event represented by the card event information corresponds to at least one of the plurality of selected card events, wherein, upon determining that the card event represented by the card event information corresponds to at least one of the plurality of selected card events, a card event notification is provided to the user device indicating the card event.

For example, the user may provide card details to several applications associated to corresponding service providers such that, when a card event is carried out in connection with one or more of the service provider entities, a card event information will be provided to the first server entity for each card event, which may then be compared to the list of user-selected card events, whereupon the selected ones of the card events will be notified to the user as described above. It is possible that the user selects a list of several card events for only one application associated to a specific service provide entity, such that the user will only be notified about the selected card events from the list when a card event has been carried out in connection with this specific service provider entity and was subsequently found in the list by the first server entity.

According to an embodiment, the method further comprises connecting multiple cards with one or more applications stored on the user device, wherein the user input comprises a selection of a plurality of card events associated to the multiple cards, thereby providing a plurality of selected card events (herein also referred to as user-selected card events), wherein the first server entity stores the plurality of selected card events, wherein it is determined at the first server entity whether the card event represented by the card event information corresponds to at least one of the plurality of selected card events, wherein, upon determining that the card event represented by the card event information corresponds to at least one of the plurality of selected card events, a card event notification is provided to the user device indicating the card event.

This means that the user may register or add multiple cards to one application or to more applications stored on the user device such that, when a card event associated to at least one of the registered cards is carried out in connection with one or more of the service provider entities, a card event information will be provided to the first server entity, which may then be compared to the list of user-selected card events, whereupon the selected ones of the card events will be notified to the user as described above. It is possible that the user may pre-select for which card and/or for what specified card events a card event notification will be generated by the first server.

According to an embodiment, the card event information is representative for a tokenized card event carried out in connection with the service provider entity.

For example, a tokenization process may be involved when the user adds or connects, e.g., registers, the card to the application. Thus, sensitive data associated to the card may be replaced with a token that is saved on the user device and/or at the second server entity. In other words, the tokenization process may allocate the sensitive data of the card to a specific token which can only be used by the parties that are involved in the tokenization process and cannot be used by any third parties, which avoids access to sensitive user data by third parties. A tokenized card event that is carried out in connection with or at a service provider entity may be recognized and transmitted as the card event information from the service provider entity to the second server entity which in this case is a token service provider. The token service provider may collect all card event information about tokenized card events associated to the card which has been connected to the application on the user device. The entirety of this card event information may be forwarded to the first server entity where the determination is made whether any tokenized card event represented by the card event information corresponds to, i.e., matches, the user-selected card event(s). In case of a correspondence, i.e., matching, the card event notification may be generated by the first server entity, whereupon this card event notification may be forwarded to the user device for notification of the user.

According to an embodiment, the first server entity comprises a user selection storage server unit configured to store the selected card event and/or one or more further selected card events associated to one or more cards.

In particular, the first server entity may be a centralized server which may be operated independently from the user device, from the second server entity and/or from the service provider entity. The first server entity may further be configured to perform the determination whether any card event represented by the card event information received from the second server entity corresponds to, i.e., matches, the user-selected card event(s) stored in the first server entity.

According to an embodiment, the second server entity comprises a token service provider unit configured to provide a token for the card connected with the application stored on the user device and/or to provide a token-based authentication information upon request of the service provider entity in connection with which the card event is carried out.

For example, when the user adds a card to the application, the token service provider unit may generate a token, e.g., a random number or the like which represents the details of the added card. This may avoid that sensitive data of the card will be accessible by third parties. If a card event is carried out in connection with the service provider entity, the token may be used to carry out and complete the card event by the service provider entity. After completion of the card event, the corresponding card event information which represents the completed card event may be obtained by the token service provider unit which then forwards this card event information to the first server entity where it can be determined if the completed card event represented by the card event information corresponds to, e.g., matches, at least one of the user-selected card events.

Furthermore, the token service provider unit may provide a token-based authentication information upon request of the service provider entity in connection with which the card event is carried out. In particular, if a user initiates an interaction or transaction based on the card that has been connected to the application, the service provider entity may send the token associated to the card to the token service provider unit where the token-based authentication is performed. This may include a comparison of the token received from service provider entity with a token stored in the token service provider unit. Upon positive authentication, the card event in connection with the service provider entity may be completed. In this manner, the token service provider unit may obtain the card event information representing the card event. This means in other words, that in the context of the authentication, the token service provider unit already knows that a card event is taking place and can immediately transmit this card event information to the first server for further processing as described above. It may not necessarily be required that the card event is completed. Even if the authentication is negative, this card event information may also be transmitted to the first server for further processing as described above.

According to an embodiment, the selected card event comprises at least one of a transaction event, a payment event, recurring payment events, a tokenization event, a token expiry event, an age-related card event and a card expiry event.

For example, if a user wants to make a payment using the application stored on the user device, this payment may be recognized by the second server entity as a tokenized card event carried out in connection with the service provider entity. After obtaining the card event information representing this tokenized card event, the second server entity may forward the card event information to the first server entity which has stored thereon the user-selected card events. If the tokenized card event corresponds to or matches the user-selected card event, the notification of the user may be initiated as described above. The user may select different card events, different types of card events or card events which only concern one or more selected service provider entities.

According to an embodiment, providing the card event notification to the user device comprises providing the card event notification to the user device at a predetermined point in time, the pre-determined point in time being pre-selected by a user of the user device.

This means that the user can pre-select a point in time, e.g., a future point in time, when the user will be notified about all card events that have taken place until that point in time. In this case, the first server entity may collect and/or store all card events for which it has been determined that the card event represented by the card event information corresponds to the selected card event. Once the point in time has come, the first server entity generates the card event notification(s) for all card events for which correspondence was identified and forwards it/them to the user device for indication to the user.

According to an embodiment, providing the card event notification to the user device comprises simultaneously providing multiple card event notifications to the user device, the multiple card event notifications being representative for corresponding card events that have been carried out over a predetermined time period.

As described above, the first server entity may collect and/or store all card events for which it has been determined that the card event represented by the card event information corresponds to the selected card event. The card event notifications for all these card events may then be forwarded to the user device at the same time, thus allowing a simultaneous presentation of all card events carried out during the predetermined time period.

According to an aspect, a system for providing a card event notification to a user is provided. The system comprises a user device, a first server entity and a second server entity. The user device is configured to connect a card with an application stored on the user device and to receive a user input comprising a selection of a card event associated to the card, thereby providing a selected card event. The user device is further configured to provide the user input to the first server entity. The first server entity is configured to store the selected card event, and the second server entity is configured to obtain a card event information that is representative for a card event carried out in connection with a service provider entity. The second server entity is configured to provide the card event information to the first server entity, and the first server entity is configured to determine whether the card event represented by the card event information corresponds to the selected card event. The first server entity is further configured to provide a card event notification to the user device indicating the card event, upon determining that the card event represented by the card event information corresponds to the selected card event.

The components and functionalities described with respect to the inventive method for providing a card event notification to a user also apply to the components and functionalities of the inventive system.

Exemplary embodiments of the invention are explained in more detail below with reference to schematic drawings.
- Fig. 1: shows a schematic representation of a system for providing a card event notification to a user.
- Fig. 2: shows a flow diagram of a method for providing a card event notification to a user.

In the drawings, identical or functionally identical elements are provided with the same reference signs.

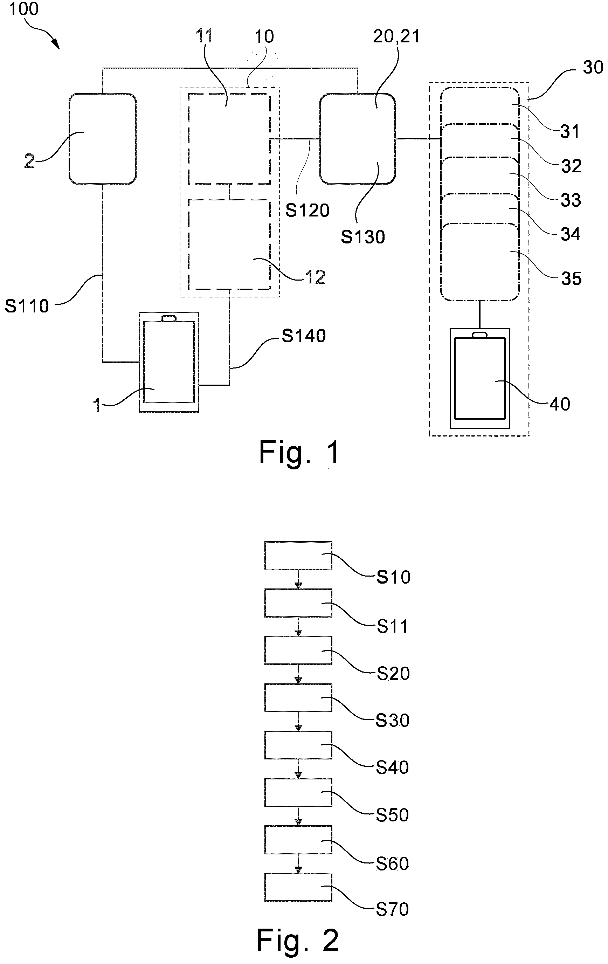

Fig. 1 shows a schematic representation of a system 100 for providing a card event notification to a user.

The system 100 comprises a user device 1, for example user mobile device like a smartphone or the like. The system further comprises a first server entity 10 and a second server entity 20.

The user may register a card, for example a payment card issued by a card issuance entity 2, with an application, for example a banking app, stored on the user device 1. Upon initiation of the registering process by the user, the user device 1 may connect, e.g., add, the card to the application. This application may provide access to functionalities and/or services that are offered by a service provider entity 30. The application can therefore be said to be associated to a particular service provider entity. Such a service provider entity may for instance be a wallet provider 31, a wearable provider 32, a car manufacturer 33, a merchant 34, a token requestor 35, a terminal device 40, etc. The service provider entity 30 may be any entity or device where the user can initiate a card event, i.e., an interaction or transaction, based on the card that has been connected to the application.

Furthermore, the user device 1 may receive a user input comprising a selection of a card event associated to the card such that a selected card event may be provided. The selected card event may have not been carried out yet, but it may represent a possible or upcoming card event that will be carried out in the future, and the user wishes to be notified of that card event. Therefore, the user may select one or more card events for which the user wishes to be notified in case these one or more card events take place. The selected card event may herein also be referred to as user-selected card event.

The user device 1 may provide the user input to the first server entity 10 and the first server entity 10 may store the selected card event.

The second server entity 20 may obtain a card event information that is representative for a card event carried out in connection with the service provider entity 30. This means that for any reason, for example upon initiation by the user itself or by a fraudulent action of a third party, the card of the user which has been previously connected to the application is used in connection with the service provider entity, e.g., in connection with a payment transaction. This card usage may be identified as a card event, and a corresponding card event information may be obtained by the second server entity 20 which may communicate with the service provider entity in the context of the card event. The obtained card event information may then be transmitted from the second server entity 20 to the first server entity 10. Thereupon, the first server entity 10 may determine whether the card event represented by the card event information corresponds to the user-selected card event stored on the first server entity 10.

If it is determined that the card event represented by the card event information corresponds to the user-selected card event, the first server entity 10 may provide a card event notification to the user device 1 indicating the card event.

It may be noted that the card event information may represent a tokenized card event carried out in connection with the service provider entity 30. In particular, a tokenization process may be involved when the user adds or connects, e.g., registers, the card with the application. Thus, sensitive data associated to the card may be replaced with a token that is saved on the user device 1 and/or at the second server entity 20. A tokenized card event that is carried out in connection with the service provider entity 30 may be recognized by the second server entity 20 which in this case may be a token service provider 21. The token service provider 21 may collect all card event information about tokenized card events associated to the card which has been previously connected to the application on the user device 1. The entirety of this card event information may be forwarded to the first server entity 10 where the determination is made whether any tokenized card event represented by the card event information corresponds to, i.e., matches, the user-selected card event(s). In case of a correspondence, i.e., matching, the card event notification may be generated by the first server entity 10, whereupon this card event notification may be forwarded to the user device 1 for notification of the user.

To summarize the above-described principles in view of Fig. 1, the following can be said:
First, at step S110, a user may browse and select desired notifications in a mobile app (e.g., a banking app) stored on the user device 1 by selecting one or more card events about which the user wishes to be informed. Then, at step S120, the user selection is stored on the first server entity 10. Then, at step S130, the token service provider (TSP) 21 receives information about all card events from the token requestors 31, 32, 33, 34, 35, 40 (merchants, wallet providers, etc.). Then, at step S140, the first server entity 10 sends the information relating to the selected notifications to the mobile app where they are presented to the user and the user can see them.

The first server entity 10 may include different units that provide additional functionalities and/or services. For example, a first sub-unit 11 of the first server entity 10 (herein also referred to as user selection storage server 11) may provide consolidated access to token requestors 35 and/or payment networks that permit connection to multiple token services providers (TSPs). For example, a second sub-unit 12 of the first server entity 10 may provide a token management tool that can be integrated into the application stored on the user device 1 which allows the user to use the application as a remote control for the cards connected with the application.

Fig. 2 shows a flow diagram of a method for providing a card event notification to a user. The method may be performed by the system 100 described with respect to Fig. 1

A step S10 of the method comprises connecting a card with an application stored on a user device 1. Another step S11 may comprise connecting multiple cards with one or more applications stored on the user device 1. A step S20 of the method comprises receiving a user input comprising a selection of a card event associated to the card, thereby providing a selected card event. A step S30 of the method comprises providing the user input to a first server entity 10 which stores the selected card event. A step S40 of the method comprises obtaining a card event information by a second server entity 20, the card event information being representative for a card event carried out in connection with a service provider entity 30. A step S50 of the method comprises providing the card event information from the second server entity 20 to the first server entity 10. A step S60 of the method comprises determining, at the first server entity 10, whether the card event represented by the card event information corresponds to the selected card event. A step S70 of the method comprises providing a card event notification to the user device 1 indicating the card event, upon determining that the card event represented by the card event information corresponds to the selected card event.

## Claims

1. A method for providing a card event notification to a user, comprising:
connecting a card with an application stored on a user device (1, S10);
receiving a user input comprising a selection of a card event associated to the card, thereby providing a selected card event (S20);
providing the user input to a first server entity (10) which stores the selected card event (S30);
obtaining a card event information by a second server entity (20), the card event information being representative for a card event carried out in connection with a service provider entity (30, S40);
providing the card event information from the second server entity (20) to the first server entity (10, S50);
determining, at the first server entity (10), whether the card event represented by the card event information corresponds to the selected card event (S60);
upon determining that the card event represented by the card event information corresponds to the selected card event, providing a card event notification to the user device (1) indicating the card event (S70).

2. The method according to claim 1,
wherein the user input comprises a selection of a plurality of card events associated to the card, thereby providing a plurality of selected card events;
wherein the first server entity (10) stores the plurality of selected card events;
wherein it is determined at the first server entity (10) whether the card event represented by the card event information corresponds to at least one of the plurality of selected card events;
wherein, upon determining that the card event represented by the card event information corresponds to at least one of the plurality of selected card events, a card event notification is provided to the user device (1) indicating the card event.

3. The method according to any one of the preceding claims,
connecting multiple cards with one or more applications stored on the user device (1, S11);
wherein the user input comprises a selection of a plurality of card events associated to the multiple cards, thereby providing a plurality of selected card events;
wherein the first server entity (10) stores the plurality of selected card events;
wherein it is determined at the first server entity (10) whether the card event represented by the card event information corresponds to at least one of the plurality of selected card events;
wherein, upon determining that the card event represented by the card event information corresponds to at least one of the plurality of selected card events, a card event notification is provided to the user device (1) indicating the card event.

4. The method according to any one of the preceding claims,
wherein the card event information is representative for a tokenized card event carried out in connection with the service provider entity (30).

5. The method according to any one of the preceding claims,
wherein the first server entity (10) comprises a user selection storage server unit (11) configured to store the selected card event and/or one or more further selected card events associated to one or more cards.

6. The method according to any one of the preceding claims,
wherein the second server entity (20) comprises a token service provider unit (21) configured to provide a token for the card connected with the application stored on the user device (1) and/or to provide a token-based authentication information upon request of the service provider entity (30) in connection with which the card event is carried out.

7. The method according to any one of the preceding claims,
wherein the selected card event comprises at least one of a transaction event, a payment event, recurring payment events, a tokenization event, a token expiry event, an age-related card event and a card expiry event.

8. The method according to any one of the preceding claims,
wherein providing the card event notification to the user device (1) comprises providing the card event notification to the user device (1) at a predetermined point in time, the predetermined point in time being pre-selected by a user of the user device (1).

9. The method according to any one of the preceding claims,
wherein providing the card event notification to the user device (1) comprises simultaneously providing multiple card event notifications to the user device (1), the multiple card event notifications being representative for corresponding card events that have been carried out over a predetermined time period.

10. A system (100) for providing a card event notification to a user, comprising:
a user device (1);
a first server entity (10);
a second server entity (20);
wherein the user device (1) is configured to connect a card with an application stored on the user device (1);
wherein the user device (1) is configured to receive a user input comprising a selection of a card event associated to the card, thereby providing a selected card event;
wherein the user device (1) is configured to provide the user input to the first server entity (10);
wherein the first server entity (10) is configured to store the selected card event;
wherein the second server entity (20) is configured to obtain a card event information that is representative for a card event carried out in connection with a service provider entity (30);
wherein the second server entity (20) is configured to provide the card event information to the first server entity (10);
wherein the first server entity (10) is configured to determine whether the card event represented by the card event information corresponds to the selected card event;
wherein the first server entity (10) is configured to provide a card event notification to the user device (1) indicating the card event, upon determining that the card event represented by the card event information corresponds to the selected card event.
